# EUROPÄISCHE PATENTSCHRIFT

(11) **EP 1 654 141 B1**
(45) Veröffentlichungstag und Bekanntmachung des Hinweises auf die Patenterteilung: **02.05.2007**
(21) Anmeldenummer: 04740404.1
(22) Anmeldetag: 29.06.2004
(51) Int. Cl.: B60R 16/02, H01R 35/02

(54) **ÜBERTRAGUNGSVORRICHTUNG ZUR ÜBERTRAGUNG VON ELEKTRISCHEN SIGNALEN ZWISCHEN EINEM ROTOR UND EINEM STATOR**
TRANSMISSION DEVICE FOR TRANSMITTING ELECTRIC SIGNALS BETWEEN A ROTOR AND A STATOR
DISPOSITIF DE TRANSMISSION SERVANT A TRANSMETTRE DES SIGNAUX ELECTRIQUES ENTRE UN ROTOR ET UN STATOR

(43) Veröffentlichungstag der Anmeldung: 10.05.2006
(73) Patentinhaber: Valeo Schalter und Sensoren GmbH, 74321 Bietigheim-Bissingen (DE)
(72) Erfinder: SIMONIS, Karl, 75428 Illingen (DE); LIPFERT, Rainer, 74076 Heilbronn (DE); HASCH, Martin, 71701 Schwieberdingen (DE); GRUENER, Roland, 71732 Tamm (DE); BINDER, Bernd, 74372 Sersheim (DE); SUCHANEK, Jürgen, 74363 Güglingen (DE)
(74) Vertreter: Bulling, Alexander
(86) Internationale Anmeldenummer: PCT/EP2004/007007
(87) Internationale Veröffentlichungsnummer: WO 2006/002651

(56) Entgegenhaltungen:
- DE-A- 4 329 820
- DE-A- 19 734 527

## Beschreibung

Die Erfindung betrifft eine Übertragungsvorrichtung zur Übertragung von elektrischen Signalen zwischen einem Rotor und einem Stator, mit einem von dem Rotor und dem Stator gebildeten ringförmigen Zwischenraum, wobei der Zwischenraum wenigstens ein zwischen dem Rotor und dem Stator verlaufendes, im Zwischenraum auf- und abwickelbares Flachbandkabel aufnimmt, und wobei zur Stützung des Flachbandkabels im Zwischenraum wenigsten ein elastisch nachgiebiges Ringband vorgesehen ist.

Eine derartige Übertragungsvorrichtung kann beispielsweise im Lenkstockbereich eines Fahrzeuges Verwendung finden, wobei dann der Rotor lenkradseitig angeordnet ist und der Stator karosserieseitig. Bei modernen Fahrzeugen werden eine Reihe von Funktionen über Schalter am Lenkrad betätigt. Über eine die Erfindung betreffende Übertragungsvorrichtung können die durch die Schalter ausgelösten, elektrischen Signale karosserieseitigen, der Drehbewegung des Lenkrads nicht folgenden Verbrauchern oder Steuergeräten, zugeführt werden.

Aus der DE 43 29 820 A1 ist eine Übertragungsvorrichtung bekannt geworden, bei der die Flachbandkabel im Zwischenraum umgelenkt werden. Durch die Umlenkung ist es möglich, die Länge des Flachkabels zu verkürzen, und dennoch eine ausreichend hohe Umdrehungszahl des Rotors zu ermöglichen. Das Flachbandkabel besteht regelmäßig aus einer Vielzahl von parallel zueinander angeordneten Leitern, die mittels einer Grundstoffisolierung zusammengefasst sind. Zur Vermeidung, dass das Flachbandkabel sich nicht festklemmt oder schlaff wird und Faltungen aufwirft, wenn der Rotor verdreht wird, sind Rotationshilfen in Form von an jeweils dem Rotor und Stator befestigten Blindkabeln vorgesehen. Eine derartige Übertragungsvorrichtung hat sich allerdings als relativ unzuverlässig erwiesen. Insbesondere die Bereitstellung von Blindkabeln als Rotationshilfen ist relativ aufwändig, da bei der Montage der Übertragungsvorrichtung die Blindkabel, zusammen mit dem die Signale übertragenden Flachbandkabel, entsprechend aufzuwickeln sind. Werden mehrere Flachbandkabel zur Übertragung einer Vielzahl von elektrischen Signalen vorgesehen, so ist die Abstützung der Flachbandkabel mittels den Blindkabeln entsprechend aufwändiger.

Aus der DE 197 34 527 A1, die dem Oberbegriff des Anspruchs 1 entspricht, ist eine Übertragungsvorrichtung der eingangs beschriebenen Art bekannt geworden, bei der mehrere ringförmige Bänder in dem Zwischenraum angeordnet sind. Die ringförmigen Bänder haben dabei eine vorbestimmte Elastizität und sind derart hergestellt, dass sie sich zwischen dem Außenumfang des beispielsweise innen liegenden Rotors und dem Innenumfang des beispielsweise außen liegenden Stators beim Einwirken von Belastungen deformieren können. Die ringförmigen Bänder wälzen sich beim Drehen des Rotors an dem Innenumfang des Rotors beziehungsweise Stators ab. Die ringförmigen Bänder beaufschlagen dabei das Flachband gegen den Außenumfang beziehungsweise Innenumfang. Zur Vermeidung von Berührungen zweier benachbarter ringförmiger Bänder sind Kontaktvermeidungselemente in Form von Rollen oder Kugeln vorgesehen. Die Kontaktvermeidungselemente werden beim Verdrehen des Rotors entsprechend der Wälzrichtung der ringförmigen Bänder mitverdreht. Bei diesem Stand der Technik ist nachteilhaft, dass vergleichsweise viele bewegliche, von der Drehbewegung des Rotors angetriebene Bauteile, nämlich zum einen die ringförmigen Bänder und zum anderen die Kontaktvermeidungselemente, vorzusehen sind. Klappergeräusche aufgrund insbesondere der Kontaktvermeidungselemente sind dabei nicht auszuschließen. Das Verdrehen des Rotors wird durch die Kontaktvermeidungselemente zusätzlich erschwert, da diese mitgedreht werden und einer gewissen Reibung sowie einem Verschleiß unterliegen.

Der vorliegenden Erfindung liegt deshalb die Aufgabe zugrunde, eine Übertragungsvorrichtung bereitzustellen, die einen einfachen Aufbau aufweist und dennoch ein dauerhaft zuverlässiges Auf- und Abwickeln von wenigstens einem Flachbandkabel zwischen dem Rotor und dem Stator ermöglicht. Insbesondere soll wenigstens ein elastisch nachgiebiges Ringband zur Stützung des Flachbandkabels vorgesehen sein. Allerdings soll die Übertragungsvorrichtung so wenig wie möglich bewegliche Bauteile aufweisen; dennoch soll ausgeschlossen sein, dass das Ringband die Drehbewegung des Rotors beziehungsweise die Bewegung des Flachbandkabels im Zwischenraum behindert.

Diese Aufgabe wird mit einer eingangs genannten Übertragungsvorrichtung dadurch gelöst, dass das Ringband über ringbandseitige Eingriffsabschnitte vom Rotor und/oder vom Stator antreibbar ist. Der Rotor und/oder der Stator treibt dabei vorzugsweise das Ringband unmittelbar, also ohne Zwischenschaltung von weiteren beweglichen Teilen, an. Hierdurch wird ein sicheres Abwälzen des Ringbands im Zwischenraum erreicht. Ein ungewolltes Bewegen oder Verrutschen, und damit gegebenenfalls ein Behindern der Drehbewegung des Rotors, wird aufgrund des Antriebs des Ringbands verhindert. Bewegliche Zwischenelemente, die ungewollte Geräusche erzeugen oder einen ungewollten Verschleiß verursachen, sind dabei nicht erforderlich.

Durch die elastische Ausbildung des Ringbandes wird erreicht, dass das Ringband den Zwischenraum in radialer Richtung voll ausfüllt und dazu geeignet ist, das Flachbandkabel gegen einerseits den Rotor und andererseits den Stator zu beaufschlagen. Bei mehrfach auf dem Rotor und/oder Stator aufgewickeltem Flachbandkabel kann das Ringband die unterschiedliche Breite des Zwischenraums ausgleichen. Aufgrund der Vorspannung des Ringbandes liegt dieses satt am Rotor und am Stator an. Klappergeräusche aufgrund des Ringbandes im Zwischenraum werden dadurch ausgeschlossen. Das Ringband kann dabei derart sein, dass es im nicht verbauten Zustand weitgehend kreisförmig ist.

Erfindungsgemäß kann entweder der Rotor oder der Stator das Ringband antreiben. Vorteilhafterweise treiben jedoch sowohl Rotor als auch Stator das Ringband an, wodurch die sich bei Drehung des Rotors verändernde Position des Ringbands im Zwischenraum eindeutig festgelegt wird.

Gemäß einer vorteilhaften Ausgestaltung der Erfindung ist vorgesehen, dass die Eingriffsabschnitte an der Ober- und/oder Unterkante des Ringbandes als zahnlückenartige Ausnehmungen ausgebildet sind, die mit komplementären zahnartigen Antriebsabschnitten des Rotors und/oder des Stators zum Antrieb des Ringbandes zusammenwirken. Durch das Vorsehen der Eingriffsabschnitte an der Ober- und/oder Unterkante des Ringbandes wird erreicht, dass die Einriffsabschnitte ein effektives Antreiben des Ringbandes bewirken, ohne dass das Flachbandkabel beeinflusst wird oder die Bewegung des Flachbandkabels behindert wird. Die Eingriffsabschnitte, beziehungsweise die zahnlückenartigen Ausnehmungen, überragen dabei das Flachbandkabel. Entsprechend sind die zahnartigen Antriebsabschnitte des Rotors beziehungsweise des Stators oberhalb beziehungsweise unterhalb der freien Längskanten des Flachbandkabels angeordnet.

Vorteilhafterweise sind die Antriebsabschnitte des Rotors und/oder des Stators am Boden des Zwischenraums angeordnet. Hierdurch können die Antriebsabschnitte mit den Eingriffabschnitten des Ringbandes so zusammenwirken, dass das Flachbandkabel nicht beeinflusst wird.

Dabei ist erfindungsgemäß denkbar, dass die Antriebsabschnitte sich in axialer und in radialer Richtung derart erstrecken, dass die freie Kante des Flachbandkabels auf den Antriebsabschnitten zum Aufliegen kommen kann. Die Antriebsabschnitte am Rotor und/oder am Stator dienen folglich nicht nur zum Antrieb des Ringbandes, sondern außerdem als Auflage für die jeweilige freie Kante des Flachbandkabels. Hierdurch wird insgesamt die Reibung an den freien Längskanten des Flachbandkabels verringert, da nur ein partielles Aufliegen des Flachbandkabels erfolgt.

Gemäß einer weiteren Ausführungsform der Erfindung ist vorgesehen, dass die Antriebsabschnitte einen quaderförmigen Hauptteil und einen sich in radialer Richtung, dem Zwischenraum zugewandten und in Richtung Boden sich absenkenden Endteil aufweisen. Insbesondere der sich absenkende Endteil gewährleistet ein sicheres Führen des Flachbandkabels in radialer Richtung derart, dass das Flachbandkabel auf dem quaderförmigen Hauptteil sicher zum Aufliegen kommen kann. Ein Anecken oder Verkanten des Flachbandkabels an den Antriebsabschnitten wird dadurch verhindert.

Gemäß einer weiteren Ausgestaltung der Erfindung kann vorgesehen sein, dass das Ringband im Wesentlichen parallel zur Drehachse des Rotors verlaufende Deformationseinschnitte zum raupenartigen Abwälzen im Zwischenraum aufweist. Die Deformationseinschnitte können beispielsweise als Nuten oder Kerben ausgebildet sein. Dabei ist denkbar, dass sich in Längsrichtung der Deformationsabschnitte je ein Zahn erstreckt, wobei zwei benachbarte Zähne eine zahnlückenartige Ausnehmung des Eingriffsabschnitts begrenzen.

Nach einer weiteren, bevorzugten Ausführungsform der Erfindung sind mehrere Ringbänder im Zwischenraum derart vorgesehen, dass sich jeweils zwei benachbarte Ringbänder nicht berühren. Dadurch, dass die einzelnen Ringbänder erfindungsgemäß angetrieben werden, wird gewährleistet, dass ein Berühren zweier benachbarter Ringbänder ausgeschlossen ist. Insbesondere können drei oder mehr Ringbänder im Zwischenraum vorgesehen sein.

Die Erfindung betrifft außerdem ein Ringband für eine erfindungsgemäße Übertragungsvorrichtung. Ein derartiges Ringband weist Eingriffsabschnitte, die insbesondere von zahnlückenartigen Ausnehmungen gebildet sind, auf, wobei über die Eingriffsabschnitte das Ringband vom Rotor und/oder vom Stator antreibbar ist.

Weitere vorteilhafte Einzelheiten und Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine Explosionsdarstellung einer erfindungsgemäßen Übertragungsvorrichtung;
- Figur 2: eine Draufsicht auf die Übertragungsvorrichtung gemäß Figur 1; und
- Figur 3: ein Ringband einer Übertragungseinrichtung gemäß Figur 1 und 2.

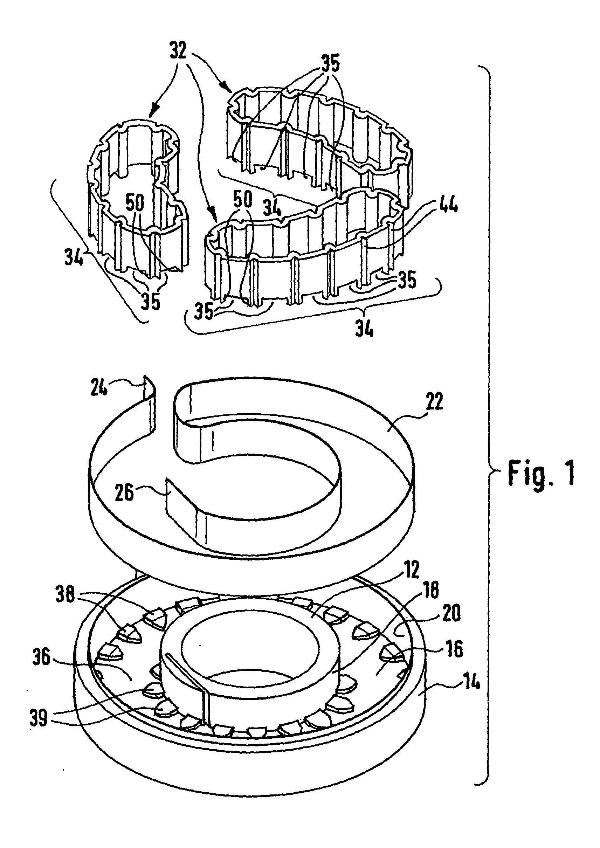

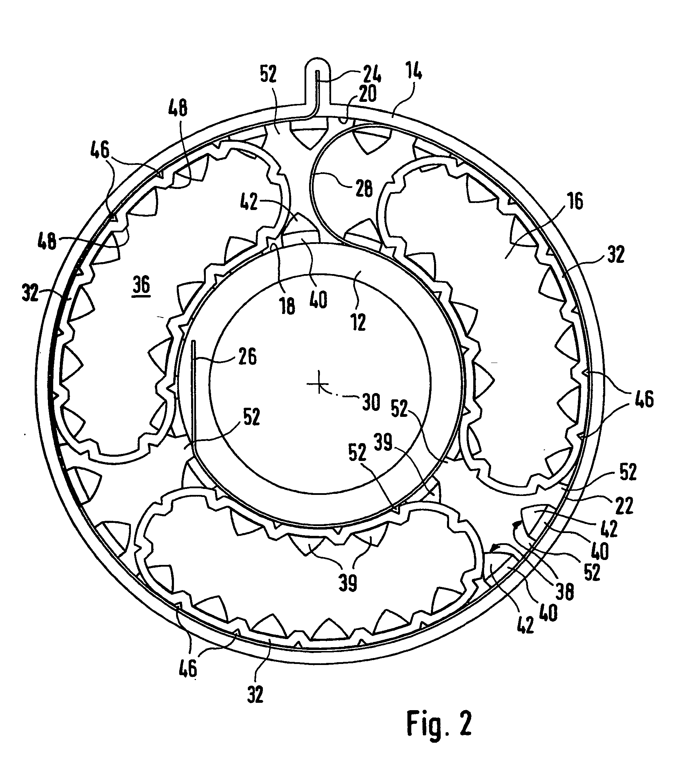

In den Figuren 1 und 2 ist eine erfindungsgemäße Übertragungsvorrichtung 10 dargestellt. Die Übertragungsvorrichtung 10 dient zur Übertragung von elektrischen Signalen zwischen einem Rotor 12 und einem Stator 14. Der Rotor 12 kann dabei mit einem Lenkrad oder einer Lenkwelle eines Kraftfahrzeugs gekoppelt sein. Der Stator kann karosserieseitig angeordnet sein und folgt dann nicht der Drehbewegung des Rotors 12. Zwischen dem Rotor 12 und dem Stator 14 ist ein ringförmiger Zwischenraum 16 vorgesehen, der in radialer Richtung von der Außenwand 18 des Rotors 12 und der Innenwand 20 des Stators 14 begrenzt wird. Der Zwischenraum 16 ist bei der in der Figur 1 und 2 gezeigten Übertragungsvorrichtung 10 nach oben hin offen dargestellt. Die offene Seite des Zwischenraums 16 ist beispielsweise mittels eines nicht dargestellten Abdeckelements abdeckbar.

Zwischen dem drehbaren Rotor 12 und dem nicht drehbaren Stator 14 ist ein Flachbandkabel 22 zur Übertragung von elektrischen Signalen vorgesehen. Das eine freie Ende 24 des Flachbandkabels 22 ist statorseitig angeordnet; das andere freie Ende 26 rotorseitig.

Aus der Figur 2 wird deutlich, dass das Flachbandkabel 22 ausgehend vom freien Ende 24 zunächst an der Innenwand 20 des Stators 14 anliegt. Im weiteren Verlauf sieht das Flachbandkabel 22 eine Schlaufe 28 vor; daran anschließend liegt das Flachbandkabel 22 an der Außenwand 12 des Rotors an, bis es letztlich im freien Ende 26 endet. Beim Verdrehen des Rotors 12 gegenüber dem Stator 14 wandert die Schlaufe 28 im Zwischenraum 16 um die Drehachse 30 des Rotors.

Zur Stützung des Flachbandkabels 22 sind im Zwischenraum insgesamt drei elastisch nachgiebige Ringbänder 32 vorgesehen.

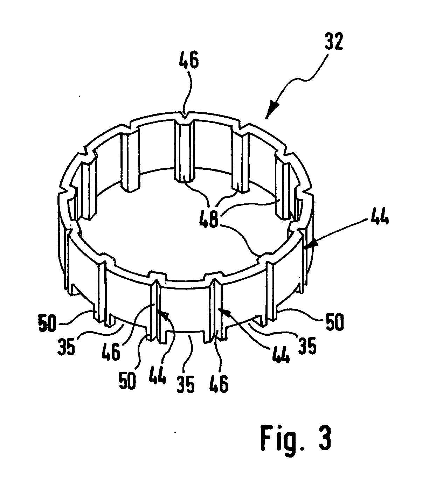

Wie aus Figur 3 deutlich wird, sind die Ringbänder 32 im nicht verbauten Zustand weitgehend kreisförmig. Im verbauten Zustand liegen die Ringbänder 32 im Zwischenraum 16 und weisen eine nieren- beziehungsweise gurkenförmige Kontur auf. Aufgrund der Elastizität der Ringbänder wirken die Ringbänder einerseits gegen die Außenwand 18 des Rotors und andererseits gegen die Innenwand 20 des Stators 14. Das Flachbandkabel 22, das einerseits an der Außenwand 18 und andererseits an der Innenwand 20 anliegt, wird durch die Ringbänder sicher im Zwischenraum 16 an die Innenwand 14 und Außenwand 18 angedrückt.

Um ein sicheres Abwälzen der Ringbänder 32 an der Außenwand 18 beziehungsweise Innenwand 20 zu gewährleisten, sehen die Ringbänder auf ihrer dem Boden 36 des Zwischenraums 16 zugewandten Seite Eingriffsabschnitte 34 vor, über die die Ringbänder 32 vom Rotor 12 und Stator 14 antreibbar sind. Dadurch wird erreicht, dass ein Verrutschen oder ungewolltes Nichtabwälzen der Ringbänder 32 im Zwischenraum 16 unterbunden wird und dass sich die Ringbänder 32 beim Verdrehen des Rotors 12 nicht gegenseitig behindern.

Der Rotor 12 sowie der Stator 14 sehen zum Eingriff in die Eingriffsabschnitte 34 zahnartige Antriebsabschnitte 38, 39 vor, die im Bereich des Bodens 36 des Zwischenraums 16 angeordnet sind und mit zahnlückenartigen Ausnehmungen 35 der Eingriffsabschnitte 34 zusammenwirken.

Die zahnartigen Antriebsabschnitte 38 des Stators 14 sind am Boden 36 des Zwischenraums angeordnet und erstrecken sich von der Innenwand 20 in Richtung Zwischenraum. Vom Rotor 12 ausgehend erstrecken sich die rotorseitigen, zahnartigen Antriebsabschnitte 39 ebenfalls am Boden 36 in Richtung Zwischenraum. Die zahnartigen, statorseitigen Antriebsabschnitte 38 sind über den gesamten Umfang der Innenwand 20 gleichmäßig am Boden 36 verteilt angeordnet. Entsprechend sind die rotorseitigen Antriebsabschnitte 39 über die gesamte Außenwandung 18 des Rotors im Bereich des Bodens 36 gleichmäßig verteilt angeordnet. Zwischen zwei zahnartigen Antriebsabschnitten 38, 39 befindet sich jeweils eine Lücke 52, wobei die ringbandseitigen, zwischen zwei Ausnehmungen 35 vorgesehenen Zähne 50 jeweils in die Lücken 52 greifen; die zahnartigen Antriebsabschnitte 38, 39 greifen in die ringbundseitigen Ausnehmungen 35.

Die einzelnen Antriebsabschnitte 38, 39 erstrecken sich jeweils in radialer Richtung (senkrecht zur Drehachse 30) als auch in axialer Richtung (parallel zur Drehachse 30). Durch die Ausbildung in axialer Richtung greifen die Antriebsabschnitte 38, 39 in die Ausnehmungen 35 der Eingriffsabschnitte 34. Durch die radiale Erstreckung der Antriebsabschnitte 38 kann die dem Boden 36 zugewandte freie Kante des Flachbandkabels 22 auf den Antriebsabschnitten 38, 39 zum Aufliegen kommen. Hierdurch wird eine Reibung des Flachbandkabels 22 am Boden 36 gering gehalten.

Wie insbesondere aus der Figur 2 deutlich wird, weisen die einzelnen Antriebsabschnitte 38, 39 einen im Wesentlichen quaderförmigen Hauptteil 40 und einen sich daran anschließenden, sich in radialer Richtung erstreckenden und sich in Richtung Boden absenkenden Endteil 42 auf. Durch die Absenkung des Endteils 42 in Richtung Boden 36 wird gewährleistet, dass das Flachbandkabel 22 sicher auf den Hauptteilen 40 der einzelnen Antriebsabschnitte 38, 39 zum Aufliegen kommen kann.

Zur Verbesserung der Elastizität der Ringbänder 32 sehen die Ringbänder 32 im Wesentlichen parallel zur Drehachse 30 verlaufende Deformationseinschnitte 44 vor. Die Deformationseinschnitte 44 sind dabei jeweils von einer im Querschnitt im Wesentlichen halbkreisförmigen Nut 46 gebildet. Da die Ringbänder 32 eine im Wesentlichen konstante Dicke aufweisen, sind auf der den Nuten 46 gegenüberliegenden Seiten Ausbeulungen 48 vorhanden.

Wie beispielsweise aus Figur 1 und 3 deutlich wird, erstreckt sich in Längsrichtung der Deformationsabschnitte 44 jeweils ein Zahn 50, wobei zwei Zähne 50 je eine zahnlückenartige Ausnehmung 35 begrenzen. Die Zähne 50 ragen im montierten Zustand zwischen jeweils eine von zwei benachbarten zahnartigen Antriebsabschnitten gebildete Lücke.

Die einzelnen Ringbänder 32 sind so zueinander verteilt im Zwischenraum 16 angeordnet, dass zwei benachbarte Ringbänder 32 sich nicht berühren können. Aufgrund der Eingriffsabschnitte 34 an den Ringbändern 32 und den zugehörigen, mit den Eingriffsabschnitten 34 zusammenwirkenden Antriebsabschnitten 38, 39 am Stator und am Rotor wird gewährleistet, dass die Ringbänder sicher und im Wesentlichen spielfrei im Zwischenraum 16 zwangsangetrieben werden. Ein Verrutschen der Ringbänder im Zwischenraum ist nicht möglich. Aufgrund der Elastizität der Ringbänder 36 wird ferner erreicht, dass weder am Stator noch am Rotor unerwünschte Geräusche auftreten.

## Patentansprüche

1. Übertragungsvorrichtung (10) zur Übertragung von elektrischen Signalen zwischen einem Rotor (12) und einem Stator (14), mit einem von dem Rotor (12) und dem Stator (14) gebildeten ringförmigen Zwischenraum (16), wobei der Zwischenraum (16) wenigstens ein zwischen dem Rotor (12) und dem Stator (14) verlaufendes, im Zwischenraum (24) auf- und abwickelbares Flachbandkabel (22) aufnimmt, und wobei zur Stützung des Flachbandkabels (22) im Zwischenraum wenigsten ein elastisch nachgiebiges Ringband (32) vorgesehen ist, **dadurch gekennzeichnet, dass** das Ringband (32) über ringbandseitige Eingriffsabschnitte (34) vom Rotor (12) und/oder vom Stator (14) antreibbar ist.

2. Vorrichtung(10) nach Anspruch 1, **dadurch gekennzeichnet, dass** die Eingriffsabschnitte (34) an der Ober- und/oder Unterkante des Ringbandes (32) als zahnlückenartige Ausnehmungen (35) ausgebildet sind, die mit komplementären zahnartigen Antriebsabschnitten (38, 39) des Rotors (14) und/oder des Stators (12) zum Antrieb des Ringbandes (32) zusammenwirken.

3. Vorrichtung (10) nach Anspruch 2, **dadurch gekennzeichnet, dass** die Antriebsabschnitte (38, 39) des Rotors und/oder des Stators am Boden (36) oder im Bereich des Bodens (36) des Zwischenraums (16) angeordnet sind.

4. Vorrichtung (10) nach Anspruch 2 oder 3, **dadurch gekennzeichnet, dass** die Antriebsabschnitte (38, 39) sich in axialer und in radialer Richtung derart erstrecken, dass die freie Kante des Flachbandkabels auf den Antriebsabschnitten (38, 39) zum Aufliegen kommen kann.

5. Vorrichtung (10) nach Anspruch 4, **dadurch gekennzeichnet, dass** die einzelnen Antriebsabschnitte (38, 39) einen im Wesentlichen quaderförmigen Hauptteil (40) und einen sich in radialer Richtung, dem Zwischenraum zugewandten und in Richtung Boden (36) sich absenkenden Endteil (42) aufweisen.

6. Vorrichtung (10) nach einem der vorhergehenden Ansprüche, **dadurch gekennzeichnet, dass** das Ringband (32) im Wesentlichen parallel zur Drehachse des Rotors verlaufende Deformationseinschnitte (44) zum raupenartigen Abwälzen aufweist.

7. Vorrichtung (10) nach Anspruch 6, **dadurch gekennzeichnet, dass** sich in Längsrichtung der Deformationseinschnitte (44) je ein Zahn (50) erstreckt, der eine zahnlückenartige Ausnehmung (35) des Eingriffsabschnitts (34) begrenzt.

8. Vorrichtung (10) nach einem der vorhergehenden Ansprüche, **dadurch gekennzeichnet, dass** mehrere Ringbänder (32) im Zwischenraum (16) derart vorgesehen sind, dass sich jeweils benachbarte Ringbänder (32) nicht berühren.

9. Ringband (32) für eine Vorrichtung nach einem der vorhergehenden Ansprüche, wobei das Ringband (32) ringbandseitige Eingriffsabschnitte (34) aufweist.

## Claims

1. Transmission device (10) for transmitting electrical signals between a rotor (12) and a stator (14) with an annular space (16) formed by the rotor (12) and the stator (14), wherein the space (16) receives at least one flat strip cable (22) which extends between the rotor (12) and the stator (14) and can be wound and unwound in the space (24), and wherein an elastically resilient annular band (32) is provided in the space to support the flat strip cable (22), **characterized in that** the annular band (32) can be driven by the rotor (12) and/or by the stator (14) via engagement sections (34) on the side of the annular band.

2. Device (10) according to claim 1, **characterized in that** the engagement sections (34) on the upper and/or lower edge of the annular band (32) are formed as tooth-gap-like recesses (35) which cooperate with complementary tooth-like drive sections (38, 39) of the rotor (14) and/or of the stator (12) to drive the annular band (32).

3. Device (10) according to claim 2, **characterized in that** the drive sections (38, 39) of the rotor and/or stator are disposed on or proximate to the bottom (36) of the space (16).

4. Device (10) according to claim 2 or 3, **characterized in that** the drive sections (38, 39) extend in an axial and radial direction such that the free edge of the flat strip cable can seat on the drive sections (38, 39).

5. Device (10) according to claim 4, **characterized in that** the individual drive sections (38, 39) comprise a substantially cuboid main part (40) and an end part (42) which faces the space in a radial direction and tapers towards the bottom (36).

6. Device (10) according to any one of the preceding claims, **characterized in that** the annular band (32) has deformation indentations (44) which extend substantially parallel to the axis of rotation of the rotor for caterpillar-like rolling.

7. Device (10) according to claim 6, **characterized in that** a tooth (50) extends in the longitudinal direction of each deformation indentation (44) to delimit a tooth-gap-like recess (35) of the engagement section (34).

8. Device (10) according to any one of the preceding claims, **characterized in that** several annular bands (32) are provided in the space (16) in such a manner that respective neighboring annular bands (32) do not contact each other.

9. Annular band (32) for the device according to any one of the preceding claims, whereby the annular band (32) comprises engagement sections (34) on a side thereof.

## Revendications

1. Système de transmission (10) pour la transmission de signaux électriques entre un rotor (12) et un stator (14) avec un espace intermédiaire annulaire (16) formé entre le rotor (12) et le stator (14), l'espace intermédiaire (16) logeant au moins un câble plat (22) s'étendant entre le rotor (12) et le stator (14), enroulable et déroulable dans l'espace intermédiaire (24) et une bande annulaire (32) élastiquement déformable au moins étant prévue dans l'espace intermédiaire comme support pour le câble plat (22), **caractérisé en ce que** la bande annulaire (32) peut être entraînée par le rotor (12) et/ou le stator (14) au moyen de parties d'engrènement (34) côté bande annulaire.

2. Système (10) selon la revendication 1, **caractérisé en ce que** les parties d'engrènement (34) sur le bord supérieur et inférieur de la bande annulaire (32) sont conçues sous forme d'évidements (35) en forme d'entre-dents qui coopèrent à l'entraînement de la bande annulaire (32) avec les parties d'entraînement (38, 39) dentées complémentaires du rotor (12) et/ou du stator (14).

3. Système (10) selon la revendication 2, **caractérisé en ce que** les parties d'entraînement (38,39) du rotor et/ou du stator sont disposées sur le fond (36) ou dans la zone du fond (36) de l'espace intermédiaire (16).

4. Système (10) selon l'une quelconque des revendications 2 ou 3, **caractérisé en ce que** les parties d'entraînement (38, 39) s'étendent en directions axiale et radiale de manière à ce que le bord libre du câble plat viennent en appui sur les parties d'entraînement (38, 39).

5. Système (10) selon la revendication 4, **caractérisé en ce que** les différentes parties d'entraînement (38, 39) présentent une partie principale (40) sensiblement parallélépipédique et une partie terminale (42), tournée vers l'espace intermédiaire dans la direction radiale et s'abaissant dans la direction du fond (36).

6. Système (10) selon l'une quelconque des précédentes revendications, **caractérisé en ce que** la bande annulaire (32) présente des entailles de déformation (44), s'étendant sensiblement parallèlement à l'axe de rotation du rotor, pour un roulement de type chenille dans l'espace intermédiaire.

7. Système (10) selon la revendication 6, **caractérisé en ce que** dans la direction longitudinale de chacune des entailles de déformation (44) s'étende une dent (50), deux dents avoisinantes étant limitées par un évidement (35) de la partie d'engrènement (34) en forme d'entre-dents.

8. Système (10) selon l'une quelconque des précédentes revendications, **caractérisé en ce que** plusieurs bandes annulaires (32) sont prévues dans l'espace intermédiaire (16) de manière à ce que deux bandes annulaires voisines (32) n'entrent pas en contact.

9. Bande annulaire (32) pour un système selon l'une quelconque des précédentes revendications, **caractérisée en ce que** la bande annulaire (32) présente des parties d'engrènement (34) côté bande annulaire.
